# EUROPEAN PATENT SPECIFICATION

(11) **EP 0 950 981 B1**
(45) Date of publication and mention of the grant of the patent: **24.12.2008**
(21) Application number: 99301526.2
(22) Date of filing: 02.03.1999
(51) Int. Cl.: G06K 15/00

(54) **Printing apparatus and method**
Druckvorrichtung und -Verfahren
Dispositif et méthode d'impression

(30) Priority: 14.04.1998 GB 9807632; 20.02.1999 GB 9903852
(43) Date of publication of application: 20.10.1999
(73) Proprietor: NCR INTERNATIONAL INC., Dayton, Ohio 45479 (US)
(72) Inventor: Lyons, Eric G., Broughty Ferry, Dundee, Scotland DD5 3BW (GB); Durajczyk, Jan, Invergowrie, Dundee, Scotland DD2 5DW (GB); Hutchinson, Brian G., Dundee, Scotland DD2 1JY (GB)
(74) Representative: MacLeod, Roderick William

(56) References cited:
- EP-A- 0 519 518
- EP-A- 0 769 737

## Description

The present invention relates to a method and apparatus for the printing of documents and in particular, but not exclusively, to the printing of documents required at a self-service terminal (SST) such as an Automated Teller Machine (ATM).

Such a printing apparatus is described in document EP 0769737.

The use of SSTs is becoming increasingly wide-spread not only in relation to the mere provision of cash funds to a customer (such as provided by a standard ATM) but also as regards the provision of other services and information (such as ski passes, and other valuable media). As a greater number of services become available at SSTs so the frequency and extent of their use is likely to increase.

The increased use of the services provided by an SST increases the importance of providing SSTs that are both reliable and efficient in operation. In view of the ever increasing range of services provided by such machines, it is becoming increasingly important for the machine to offer printed matter in the form of statements and reports. Printing statements and reports requires a relatively large amount of time compared with the total time for a customer's transaction. This can disadvantageously lead to an overall reduction in the time that the SST can handle a customer's enquiry, thereby leading to an overall decrease in the number of transactions that can be handled by the SST in any given period.

In addition to printing documents, the printer within an SST has to perform state of health or status checks. Conventionally, the printer in an SST only has a single communications interface. The print engine (i.e. the part of the printer which applies the ink/toner to the sheet) within the printer generally does not operate at its maximum speed because it receives a data stream containing both print data and command data which must be separated by the printer.

To maintain a high standard of efficiency, it would be advantageous to provide an SST in which functions involving the printing of documents do not adversely limit the overall operation ofthe SST.

The present invention therefore seeks to provide for a printing apparatus and method exhibiting advantages over known such apparatus and methods.

According to one aspect of the invention there is provided printing apparatus comprising printing means and a host processor for delivering print data and command data via a common interface to the printing means, and characterised in that the host processor is arranged to deliver the print data with a first characteristic and the command data with a second characteristic, and that the printing means includes a printing device for receiving the print data and a control device for receiving the command data, the apparatus further including detecting means for detecting the characteristic of the data appearing at the common interface, and switch means responsive to the detecting means for ensuring that command data is not routed to the printing device in the event that said second characteristic is detected.

By virtue of the invention, there is no requirement for a separate controller to parse the print data from the command data.

The common interface may be a standard parallel port interface.

In one embodiment the first and second characteristics may be the transfer modes which are used. For example, the print data may be sent using the Compatibility Mode, which is the standard Centronics mode; the command data may be sent using the Extended Capabilities Port Mode (ECP). Alternatively, the print data and the command data may be sent using the same transfer mode, but the print data may be distinguished from the command data using one or more of the commands available within that transfer mode; thus, the first characteristic may be a command being active and a second characteristic may be that command being inactive.

The manner in which the print data and command data are delivered over the common interface provides for the basis of an advantageous means for detecting which of the print data and command data is forthcoming from the host. This allows for a particularly efficient means for switching the data for delivery to its appropriate destination in a manner allowing for a direct connection of the host to the print device only when print data is being transmitted from the host device so as to advantageously allow for the full speed of the print device to be realised.

Advantageously, the detecting means is provided in a communication path for delivering the command data from the interface to the control device so as to advantageously further limit the effect that the detecting means has on the transfer of print data from the host device to the printing device.

Advantageously, at least part of the detecting means is provided by part of the control device which, particularly advantageously, can comprise a relatively low-cost CPU.

Further, the common interface may be associated with a driver which can include an output port from which data identifying the characteristic of the data arriving from the common interface can be made available.

Advantageously, the switch comprises a data switch having a pass-through mode allowing for the direct connection of the printing device to the host processor.

According to a particular advantage of one embodiment of the invention, the characteristics of the respective data delivered from the host processor comprise different transfer modes for data communication arising in accordance with an established protocol. In particular, the transfer modes are chosen from those arising in the IEEE 1284 standard and, in particular, the print data is arranged to be transferred in accordance with the so-called Compatibility Mode and the command data is arranged to be transmitted in accordance with the Extended Capabilities Port Mode. Thus, the host is arranged to transmit print data in accordance with the compatibility mode of the 1284 standard and is arranged to transmit the command data in accordance with the extended capabilities port mode of the 1284 standard.

The host processor may be arranged to provide for so-called 1284 negotiation as arising in accordance with the IEEE 1284 standard so as to set the common interface of the present invention to the appropriate mode by transmitting the respective forms of data.

Advantageously, the printing means comprises a print engine controller and a print engine mechanism and, further, the control means comprises a media handler/ communication controller and a media handler mechanism.

In accordance with a further feature of the present invention, direct connectivity can be provided between the print engine controller and the media handler controller so as to allow for the direct transfer of status/state information from the print engine controller directly to the media handler controller which can then be passed on to the host processor.

Advantageously, the control device is arranged to receive command data at the same time as it serves to disable the switch.

Preferably, in accordance with a particular embodiment of the present invention, the printing apparatus comprises part of the print mechanism of a self-service customer access machine and, in particular, an automated teller machine.

According to a particular advantage of another embodiment of the invention, the print data and the command data may be sent using the same transfer mode, but the print data may be distinguished from the command data using one or more of the commands available within that transfer mode; thus, the first characteristic may be a command being active and a second characteristic may be the command being inactive in accordance with an established protocol. In particular, the commands are chosen from those arising in the so-called Compatibility Mode of the IEEE 1284 standard. The print data is arranged to be transferred in accordance with the "Request Device ID" command being inactive (not asserted), and the command data is arranged to be transmitted in accordance with the "Request Device ID" command being active (asserted). Thus, when the host is delivering print data it ensures that the "Request Device ID" command is inactive, whereas when the host is delivering command data it ensures that the "Request Device ID" command is active.

According to a second aspect of the present invention there is provided a method for printing documents comprising the steps of delivering print data and command data from a host processor to printing means comprising a printing device and a control device via a common interface, and characterised by the further steps of assigning a first characteristic to the print data and a second characteristic to the command data, detecting the characteristic of the data, and in response to said second characteristic being detected, ensuring that command data is not routed to the printing device.

The present invention is described further hereinafter, by way of example only, with reference to the accompanying drawings in which:
Fig. 1 is a schematic block diagram of a self-service printer known in the prior art;
Fig. 2 is a schematic block diagram of a self-service printer according to one embodiment of the present invention.
Fig. 3 is a schematic block diagram of a self-service printer according to another embodiment of the present invention;
Fig. 4 is a pictorial view of an SST including a self service printer according to one embodiment of the invention; and
Fig. 5 is a block diagram of the SST of Fig. 4.

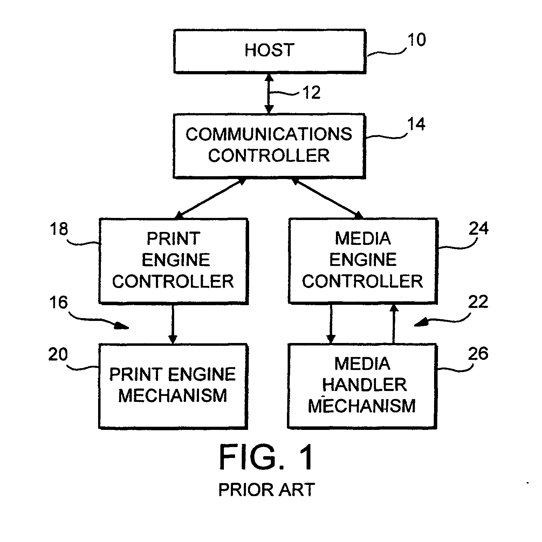

Referring to Fig. 1, there is illustrated a self-service printer such as that provided in an ATM and as currently known in the prior art.

Such a printer arrangement comprises a host processor 10 which, by means of a single communications interface 12 serves to deliver print data and command data via a common communications controller 14 to either a print device 16 comprising a print engine controller 18 and a print engine mechanism 20, or a control device 22 comprising a print handler controller 24 and a media handler mechanism 26.

The command data is typically control data for determining the status of the printer and its various components. For example, command data may be used to determine whether media which has been presented to a user has been removed by the user, to determine how full the capture bin is, how much printer paper is left, and such like.

The directions of data transfer in accordance with the sub-systems are indicated by the arrows shown in the drawing.

The use of a single communications interface 12 to the host 10 dictates that the data arriving at the communications controller 14 must be split into its print and command components and then directed to the print device 16 and control device 22 respectively.

In accordance with known self-service printers, the communications controller 14 serves to parse the data stream received from the host processor so as to direct respective elements of the data stream to the appropriate target, i.e. the print device 16 or the control device 22. The print device 16 is generally considered to be communication intensive while the actual communication requirements of the control device 22 such as the media handler controller 24 and the media handler mechanism 26 are much less and considered to be minimal. The performance of the print device 16 is therefore based on this requirement and the performance of the print engine controller 18 and the print engine mechanism 20 commonly exceeds the maximum potential performance of the communications controller 14 which can therefore disadvantageously place a limit on the overall performance of the self-service printer.

Thus, the performance of the communications controller 14 can be seen as the main restriction on the speed of operation that can be achieved by the self-service printer.

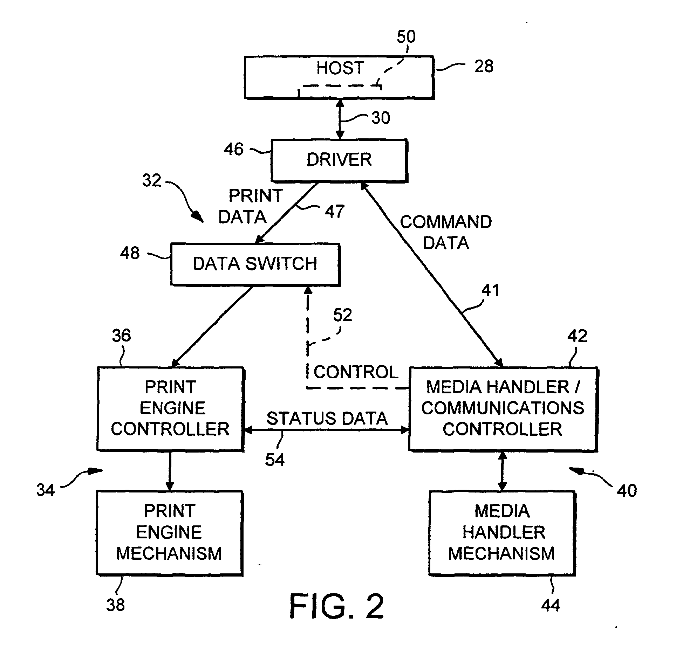

Referring to Fig. 2, there is shown a schematic block diagram of a self-service printer embodying the present invention. In the illustrated embodiment, the involvement of the communications controller shown in Fig. 1 is advantageously eliminated while having no disadvantageous effect on the functionality of the overall self-service system.

Thus, the present invention overcomes the need to rely on a generally speed-limiting communications controller and the parsing of the data stream passing therethrough.

The illustrated embodiment of the present invention employs data communications features specified in the standard "IEEE std. 1284 - 1994 Standard Signalling Method for a Bi-directional Parallel Peripheral Interface for Personal Computers", further details of which are discussed below.

In Fig. 2 there is shown a self-service printer controlled by a host processor 28 and which is intended to generate, sequence, and deliver print data and command data by way of a common interface 30.

The common interface 30 delivers the data to a switching arrangement 32 which serves to route the print data on to a print device 34 comprising a print engine controller 36 and a print engine mechanism 38, and to route the command data to a control device 40 via command lines 41. The control device 40 comprises a media handler/ communications controller 42 and a media handler mechanism 44.

In the illustrated embodiment, the switching arrangement 32 comprises a driver 46 for receiving the data from the common interface 30, and a data switch 48 connected to the driver 46 by print data lines 47. When the data switch 48 is enabled it allows for direct connectivity between the host processor 28 and the print device 34 so that the print data is passed directly from the host processor 28 via print data lines 47 to the print device 34. The driver 46 also connects to the media handler/communications controller 42 via command lines 41 for delivery of command data thereto.

When the driver 46 receives print or command data it puts the received data onto the print data lines 47 and it also puts the received data onto the command lines 41. Thus, both print data and command data are presented to the data switch 48 and to the media handler/communications controller 42. However, the data switch only routes data to the print device 34 when print data is present on the print data lines 47, whereas the media handler 42 only receives and operates on data when command data is present on the command lines 41.

The host processor 28 includes a manager component 50 which determines whether the data to be sent is print data or command data. As noted above, the illustrated embodiment of the present invention employs features specified in the IEEE 1284 standard and, in particular, the host processor 28 is arranged so as to deliver both print data and command data in accordance with the Compatibility Mode of that Standard.

If the data to be sent is print data, then the manager component 50 ensures that the "Request Device ID" command (as specified in the 1284 standard) is not in the active state (the first characteristic). The media handler/communications controller 42 monitors the state of the "Request Device ID" command, and if the "Request Device ID" command is inactive it inactivates a control signal 52 to ensure that the data switch 48 routes the print data to the print engine 36. The media handler/communications controller 42 ignores the print data on the command lines 41 but continues to monitor the "Request Device ID" command.

If the data to be sent is command data, then the manager component 50 ensures that the "Request Device ID" command is activated (the second characteristic). The media handler/communications controller 42 detects that the "Request Device ID" command is activated and activates the control signal 52 to ensure that the data switch 48 does not route the command data to the print engine 36. The control device 40 also responds to the "Request Device ID" command by returning identification data using Nibble mode reverse channel transfer according to the 1284 standard. Thus, controller 42 responds to the standard "Request Device ID" command and also ensures that the data presented to the command lines 41 is received by the controller 42. It will thus be appreciated that in this embodiment a standard command (the "Request Device ID" command) is used both for its usual function and to control the routing of data.

Once the manager component 50 has activated the "Request Device ID" command, it then sends the command data on the eight parallel lines of the common interface 30, and this data is routed to the control device 40 via command lines 41. When all of the command data has been sent to the control device 40, the manager 50 then sends a predetermined signal or sequence of signals on the eight lines of interface 30 to inform the controller 42 that all command data has been sent. When the controller 42 is informed that all command data has been sent, it then inactivates the control signal 52 so that data switch 48 routes all data to the print engine 36.

As illustrated by way of the data link 54, status data can be delivered directly from the print engine controller 36 to the media handler/communications controller 42 which can, in turn, be delivered directly from the controller 42 back to the host processor 28 for instigating the appropriate activities such as diagnostic and corrective activities.

As both print data and command data is transferred using the Compatibility Mode, this invention could be implemented in self service terminals having interfaces which do not support any of the extended transfer modes such as ECP.

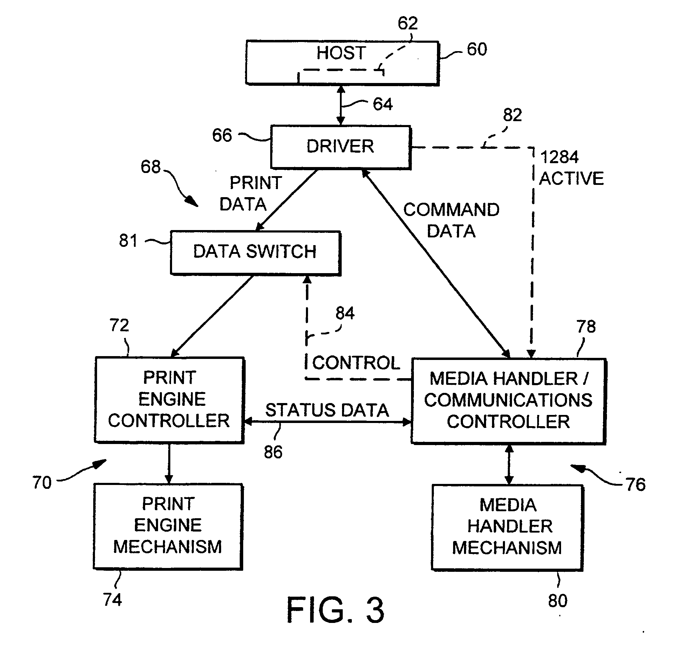

Referring now to Fig. 3, there is shown a self service printer according to another embodiment of the invention. The printer has a host processor 60 incorporating a manager 62 and which delivers print data and command data by way of a common interface 64 to a driver 66.

The common interface 64 delivers the data to a switching arrangement 68 which serves to pass the print data on to a print device 70 comprising a print engine controller 72 and a print engine mechanism 74, and to pass on the command data to a control device 76 comprising a media handler/communications controller 78 and a media handler mechanism 80. The switching arrangement includes a data switch 81 which, when enabled, allows for direct connectivity between the host processor 60 and the print device 70.

The driver 66 includes a data port 82 which serves to provide an indication of the particular transfer mode of the 1284 standard currently being employed during the transfer of data from the host processor 60.

The status of the data port 82 of the driver 66 is detected within the media handler/communications controller 78, which may advantageously comprise a low-cost PC, and, on the basis of the status of the data port 82 determined by the media handler/communications controller 78, a control signal 84 is delivered to the data switch 81. In the illustrated embodiment, an active signal at the data port 82 of the driver 66 as detected by the media handler/communications controller 78, serves to disable the data switch 81 via the control signal 84 so as to allow only for direct conductivity between the host processor 60 and the control device 76.

Thus, transfer of the print data from the host processor 60 to the print device 70 occurs in accordance with the aforesaid Compatibility Mode and the existence of this mode is readily detected by the media handler/communications controller 78 which, by means of its control signal 84, serves to switch the data switch 81 to a pass-through mode so as to allow for direct connectivity between the host processor 60 and the print device 70 so that the media handler/communications controller 78 then plays no further part in data transfer.

In this mode, it will be appreciated that the direct connectivity between the host processor 60 and the print device 70 means that the full performance of the print engine controller 72 and the print engine mechanism 74 can be realised by the self-service printer since the only constraint in the overall operating speed is that determined by the performance of the print engine controller 72 and print engine mechanism 74.

However, when command data is to be transmitted from, and received by, the host processor 60, the data is arranged by the manager 62 to be transmitted in accordance with the Extended Capabilities Port Mode of the IEEE 1284 standard.

The provision of the two aforementioned modes, i.e. Compatability Mode for print data transfer, and the Extended Capabilities Port Mode for a control data transfer, is achieved by means of so-called 1284 negotiation at the host processor 60 in accordance with the IEEE 1284 standard/protocol. As noted in the aforementioned protocol, the concept of "negotiation" has been developed so as to allow a host to determine what the particular capabilities of an attached peripheral might be, and to arrive at a method by which the common interface employed can be set to the appropriate mode. During the negotiation phase, the host commonly places a request on the data lines and then initiates a negotiation sequence. The request can be effectively to put the interface into a particular mode, or request a particular device identification from the peripheral device.

When the Extended Capabilities Port Mode is employed, the data port 82 of the driver 66 becomes active and this is detected by the media handler/communications controller 78 which then provides a control signal 84 serving to disable the data switch 81 such that subsequent data transfer takes place between the host processor 60 and the media handler/communications controller 78 and the media handler mechanism 80.

As illustrated by way of the data link 86, status data can be delivered directly from the print engine controller 72 to the media handler/communications controller 78 which can, in turn, be delivered directly from the controller 78 back to the host processor 60 for instigating the appropriate activities such as diagnostic and corrective activities.

It will therefore be appreciated from the above embodiments that, with regard to a self-service printer such as that illustrated in this drawings, the problem of a printer which is part of an ATM with a single communications interface not working at the maximum potential speed of the print engine within it can be advantageously overcome by avoiding the manner in which the print and command/status data in the data stream from the host processor are separated in the printer. The full speed of the print engine can therefore be realised over a single parallel communications interface whilst maintaining all self-service functionality previously available. As will be appreciated, a low-cost processor can be used as the media handler/communications controller 42 or 78 and the speed of the communications controller 14 arising in the prior art is removed as a potential bottle neck in the communication intensive print-rendering process. Thus, the present invention enables print-rendering subsystem performance enhancements to be directly available to a host system without requiring corresponding performance enhancements of a communications controller 14 as would be required with the prior art.

As mentioned above, the present invention makes use of features arising in the standard "IEEE 1284 - 1994 Standard Signalling Method for a Bi-Directional Parallel Peripheral Interface for Personal Computers".

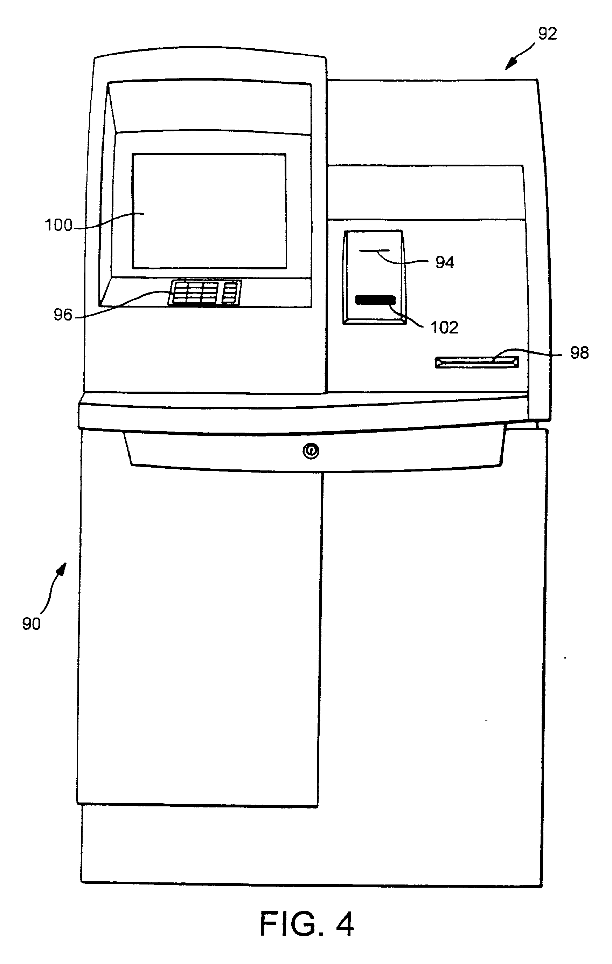

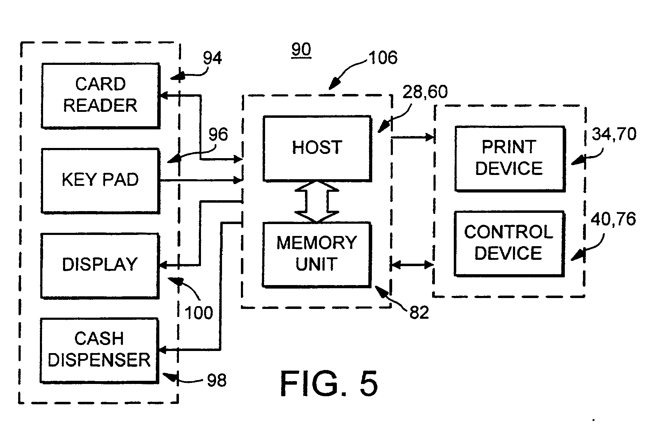

Referring now to Figs. 4 and 5, an automated teller machine (ATM) 90 including the printing apparatus of Fig. 2 or Fig. 3 will now be described. The ATM 90 includes a user interface panel 92 and includes a card reader slot 94, a key pad 96, a cash dispenser slot 98, a CRT display screen 100, a receipt printer slot 102 and the host processor 28 or 60. The card reader, the cash dispenser mechanism and the receipt printer modules associated with the respective slots 94, 98 and 102 on the user panel 92 of the ATM 90, are designated by the same reference numerals. The ATM 90 further comprises a host control unit 106 which communicates with components of the front panel 92 and with various other operating mechanisms of the ATM 90. The host control unit 106 is connected to the print device 34, 70 and the control device 40, 76, and includes the host processor 28 or 60 and a memory unit 82 connected via a bus line to the host processor 28 or 60. As illustrated in Fig. 5, the host processor 28 or 60 receives input signals from the card reader 94 and the keypad 96 and provides output signals to various mechanisms of the cash dispenser 98, the display 100 and to the receipt printer 34 or 70. It should be understood that the host processor 28 or 60 controls the amount of cash dispensed by the cash dispenser 98, the information displayed on the display 100 and the information printed by the receipt printer 34 or 70.

In a typical ATM cash withdrawal transaction, a customer inserts his customer identification card into the card reader slot 94 and data encoded on the card is read. Instructions are then displayed on the screen 100. The customer is requested to enter a personal identification number (PIN) on the key pad 96 which is verified, usually at a central location remote from the ATM 90. If the PIN is determined to be correct, a menu of the various facilities available to the customer is then displayed on the screen 100. If a cash withdrawal facility is selected, the customer is requested to enter the sum required on the key pad 96. This request is transmitted to the host processor 28 or 60 as a currency pick operation request for the number of currency notes to be dispensed to the customer. The desired number of notes are picked from one or more currency cassettes (not shown) in the cash dispenser module 98 and are fed by a transport mechanism (not shown) to a stacking mechanism (not shown), and are then delivered to the customer through the cash dispenser slot 98 in the user panel 92 of the ATM 90. Receipt print data for the cash withdrawal transaction and print command data are transmitted from the host processor 28 or 60 to the print engine controller 36 or 72 and the media handler controller 42 or 78 via the driver 46 or 66 and/or the data switch 48 or 81 as described above in relation to Figs. 2 and 3. The receipt print data is then printed on a paper receipt by the print engine mechanism 38 or 74 and the receipt bearing details of the cash withdrawal transaction is delivered to the customer by means ofthe media handler mechanism 44 or 80 through the receipt printer slot 102 in the user panel 92 of the ATM 90.

It should be appreciated that the present invention is not restricted to the details of the foregoing embodiments. For example, the present invention may be incorporated in any particular form of self-service terminal and need not necessarily be provided as part of an ATM. In other embodiments, the switch means (32, 68) may be arranged so that the print data is only delivered to the printing device, not the control device.

## Claims

1. Printing apparatus comprising printing means and a host processor (28 or 60) for delivering print data and command data via a common interface (30 or 64) to the printing means, and **characterised in that** the host processor (28 or 60) is arranged to deliver the print data with a first characteristic and the command data with a second characteristic, and that the printing means comprises a printing device (34 or 70) for receiving the print data and a control device (40 or 76) for receiving the command data, the apparatus further including detecting means (42 or 78) for detecting the characteristic of the data appearing at the common interface (30 or 64), and switch means (32 or 68) responsive to the detecting means (42 or 78) for ensuring that command data is not routed to the printing device (34 or 70) in the event that said second characteristic is detected.

2. Apparatus as claimed in claim 1, wherein the detecting means (42 or 78) is provided in a communication path for delivering the command data from the interface (30 or 64) to the control device (40 or 76) and the response data from the control device (40 or 76) to the common interface (30).

3. Apparatus as claimed in claim 2, wherein at least part of the detecting means (42 or 78) is provided by part of the control device (40 or 76).

4. Apparatus as claim in any of claims 1 to 3, wherein the characteristics of the respective data delivered from the host processor (60) comprise different states of a command available within a transfer mode.

5. Apparatus as claimed in any of claims 1 to 3, wherein the characteristics of the respective data delivered from the host processor (28) comprise different modes for data communication arising in accordance with an established protocol.

6. Apparatus as claimed in claim 5, wherein the modes are chosen from those arising in the IEEE 1284 standard and wherein the print data is arranged to be transferred in accordance with the Compatibility Mode, and the command data is arranged to be transmitted in accordance with the Extended Capabilities Port Mode.

7. Apparatus as claimed in any one of claims 1 to 6, wherein the printing means comprises a print engine controller (36 or 72) and a print engine mechanism (38 or 74) and the control means (40 or 76) comprises a media handler/communications controller (42 or 78) and a media handler mechanism (44 or 80).

8. Apparatus as claimed in claim 7, wherein direct connectivity (54 or 86) is provided between the print engine controller (36 or 72) and the media handler/communications controller (42 or 78) so as to allow for the direct transfer of status or state information from the print engine controller directly to the media handler controller.

9. Apparatus as claimed in any one of claims 1 to 8, wherein the printing apparatus comprises part of the print mechanism of a self-service customer access machine.

10. A method for printing documents comprising the steps of delivering print data and command data from a host processor (28 or 60) to printing means comprising a printing device (34 or 70) and a control device (40 or 76) via a common interface (30 or 64), and **characterised by** the further steps of assigning a first characteristic to the print data and a second characteristic to the command data, detecting the characteristic of the data, and in response to said second characteristic being detected ensuring that command data is not routed to the printing device (34 or 70).

## Patentansprüche

1. Druckvorrichtung mit einem Druckmittel und einem Host-Prozessor (28 oder 60) zum Liefern von Druckdaten und Befehlsdaten über eine gemeinsame Schnittstelle (30 oder 64) an das Druckmittel, und **dadurch gekennzeichnet, dass** der Host-Prozessor (28 oder 60) angeordnet ist, um die Druckdaten mit einer ersten Ausprägung und die Befehlsdaten mit einer zweiten Ausprägung zu liefern, und dass das Druckmittel ein Druckgerät (34 oder 70) zum Empfangen der Druckdaten und ein Steuergerät (40 oder 76) zum Empfangen der Befehlsdaten aufweist, wobei die Vorrichtung weiterhin ein Erkennungsmittel (42 oder 78) zum Erkennen der Ausprägung der an der gemeinsamen Schnittstelle (30 oder 64) erscheinenden Daten sowie ein Schaltmittel (32 oder 68) aufweist, das auf das Erkennungsmittel (42 oder 78) anspricht, um sicherzustellen, dass die Befehlsdaten in dem Fall nicht an das Druckgerät (34 oder 70) weitergeleitet werden, dass die zweite Ausprägung erkannt wird.

2. Vorrichtung wie in Anspruch 1 beansprucht, wobei das Erkennungsmittel (42 oder 78) in einem Kommunikationspfad zum Liefern der Befehlsdaten von der Schnittstelle (30 oder 64) zu dem Steuergerät (40 oder 76) und der Antwortdaten von dem Steuergerät (40 oder 76) zu der gemeinsamen Schnittstelle (30) angeordnet ist.

3. Vorrichtung wie in Anspruch 2 beansprucht, wobei mindestens ein Teil des Erkennungsmittels (42 oder 78) als ein Teil des Steuergeräts (40 oder 76) bereitgestellt ist.

4. Vorrichtung wie in einem der Ansprüche 1 bis 3 beansprucht, wobei die Ausprägungen der jeweils von dem Host-Prozessor (60) gelieferten Daten verschiedene Zustände eines Befehls aufweisen, der innerhalb eines Transfermodus verfügbar ist.

5. Vorrichtung wie in einem der Ansprüche 1 bis 3 beansprucht, wobei die Ausprägungen der jeweils von dem Host-Prozessor (28) gelieferten Daten verschiedene Modi zur Datenübertragung aufweisen, die entsprechend einem etablierten Protokoll auftreten.

6. Vorrichtung wie in Anspruch 5 beansprucht, wobei die Modi aus denen ausgewählt werden, die bei dem IEEE-1284-Standard auftreten und wobei die Druckdaten angeordnet sind, um entsprechend dem "Compatibility Mode" übertragen zu werden, und bei dem die Befehlsdaten angeordnet sind, um entsprechend dem "Extended Capabilities Port Mode" übertragen zu werden.

7. Vorrichtung wie in einem der Ansprüche 1 bis 6 beansprucht, wobei das Druckmittel einen Druckmaschinencontroller (36 oder 72) und einen Druckmaschinenmechanismus (38 oder 74) aufweist und das Steuermittel (40 oder 76) einen Medien-Handler/Kommunikationscontroller (42 oder 78) und einen Medien-Handler-Mechanismus (44 oder 80) aufweist.

8. Vorrichtung wie in Anspruch 7 beansprucht, wobei eine direkte Konnektivität (54 oder 86) vorgesehen ist zwischen dem Druckmaschinen-Controller (36 oder 72) und dem Medien-Handler/Kommunikationscontroller (42 oder 78), um eine Direktübertragung von Status- oder Zustandsinformationen von dem Druckmaschinencontroller direkt zu dem Medien-Handler-Controller zu ermöglichen.

9. Vorrichtung wie in einem der Ansprüche 1 bis 8 beansprucht, wobei die Druckvorrichtung einen Teil des Druckmechanismus eines Selbstbedienungs-Kunden-Zugriffsterminals umfasst.

10. Verfahren zum Drucken von Dokumenten umfassend die Schritte des Lieferns von Druckdaten und Befehlsdaten von einem Host-Prozessor (28 oder 60) zu einem Druckmittel umfassend ein Druckgerät (34 oder 70) und ein Steuergerät (40 oder 76) über eine gemeinsame Schnittstelle (30 oder 64), und **gekennzeichnet durch** die weiteren Schritte des Zuweisens einer ersten Ausprägung zu den Druckdaten und einer zweiten Ausprägung zu den Befehlsdaten, des Erkennens der Ausprägung der Daten, und als Antwort auf die Detektion der zweiten Ausprägung die Sicherstellung, dass die Befehlsdaten nicht an das Druckgerät (34 oder 70) weitergeleitet werden.

## Revendications

1. Installation d'impression comprenant des moyens d'impression et un processeur ( 28 ou 60 ) hôte pour envoyer des données d'impression et des données d'instruction par l'intermédiaire d'une interface ( 30 ou 64 ) commune aux moyens d'impression, et **caractérisée en ce que** le processeur ( 28 ou 60 ) hôte est conçu pour fournir les données d'impression avec une première caractéristique et les données d'instruction avec une deuxième caractéristique, et **en ce que** les moyens d'impression comprennent un dispositif ( 34 ou 70 ) d'impression pour recevoir les données d'impression et un dispositif ( 40 ou 76 ) de commande pour recevoir les données d'instruction, l'installation comprenant en outre des moyens ( 42 ou 78 ) de détection pour détecter la caractéristique de la donnée apparaissant à l'interface ( 30 ou 64 ) commune, et des moyens de commutation ( 32 ou 68 ) en réponse à des moyens ( 42 ou 78 ) de détection pour être sûr que les données d'instruction ne soient pas acheminées au dispositif ( 34 ou 70 ) d'impression dans le cas où la deuxième caractéristique est détectée.

2. Installation suivant la revendication 1, dans laquelle les moyens ( 42 ou 78 ) de détection sont prévus dans un trajet de communication pour envoyer les données d'instruction de l'interface ( 30 ou 64 ) au dispositif ( 40 ou 76 ) de commande et les données de réponse du dispositif ( 40 ou 76 ) de commande à l'interface ( 30 ) commune.

3. Installation suivant la revendication 2, dans laquelle au moins une partie des moyens ( 42 ou 78 ) de détection est prévue par une partie du dispositif ( 40 ou 76 ) de commande.

4. Installation suivant l'une quelconque des revendications 1 à 3, dans laquelle les caractéristiques des données respectives envoyées par le processeur ( 60 ) hôte comprennent des états différents d'une instruction disponible au sein d'un mode de transfert.

5. Installation suivant l'une quelconque des revendications 1 à 3, dans laquelle les caractéristiques des données respectives envoyées par le processeur ( 28 ) hôte comprennent des modes différents de communication de données provenant d'un protocole établi.

6. Installation suivant la revendication 5, dans laquelle les modes sont choisis parmi ceux provenant de la norme IEEE 1284 et dans laquelle les données d'impression sont conçues pour être transférées suivant le Compatibility Mode, et les données d'instruction sont conçues pour être transmises suivant l'Extended Capabilities Port Mode.

7. Installation suivant l'une quelconque des revendications 1 à 6, dans laquelle les moyens d'impression comprennent un dispositif ( 36 ou 72 ) de commande du moteur d'impression et un mécanisme ( 38 ou 74 ) de moteur d'impression, et les moyens ( 40 ou 76 ) de commande comprennent un manipulateur de support/ dispositif de commande de communications ( 42 ou 78 ) et un mécanisme ( 44 ou 80 ) de manipulateur de support.

8. Installation suivant la revendication 7, dans laquelle une connexion ( 54 ou 86 ) directe est ménagée entre le dispositif ( 36 ou 72 ) de commande du moteur d'impression et le manipulateur de support/dispositif de commande de communications ( 42 ou 78 ), de manière à permettre le transfert direct d'information de statuts ou d'état du dispositif de commande du moteur d'impression directement au dispositif de commande du manipulateur de support.

9. Installation suivant l'une quelconque des revendications 1 à 8, dans laquelle l'installation d'impression comprend une partie du mécanisme d'impression d'une machine dans laquelle le client a accès en libre-service.

10. Procédé d'impression de documents comprenant les stades dans lesquels on envoie des données d'impression et des données d'instruction depuis un processeur ( 28 ou 60 ) hôte à des moyens d'impression comprenant un dispositif ( 34 ou 70 ) d'impression et un dispositif ( 40 ou 76 ) de commande par l'intermédiaire d'une interface ( 30 ou 64 ) commune, et **caractérisé par** les stades supplémentaires dans lesquels on affecte une première caractéristique aux données d'impression et une deuxième caractéristique aux données d'instruction, on détecte la caractéristique des données et, en réponse à la deuxième caractéristique qui est détectée, on s'assure que des données d'instruction ne sont pas acheminées au dispositif ( 34 ou 70 ) d'impression.
